# EUROPEAN PATENT SPECIFICATION

(11) **EP 3 206 919 B1**
(45) Date of publication and mention of the grant of the patent: **22.05.2019**
(21) Application number: 15790354.3
(22) Date of filing: 16.10.2015
(51) Int. Cl.: B60S 1/40

(54) **WINDSCREEN WIPER DEVICE**
SCHEIBENWISCHERVORRICHTUNG
DISPOSITIF D'ESSUIE-GLACE

(30) Priority: 17.10.2014 US 201462065351 P
(43) Date of publication of application: 23.08.2017
(73) Proprietor: Federal-Mogul Motorparts LLC, Southfield, MI 48034 (US)
(72) Inventor: YOUNG, William D. III, Waterford, MI 48329 (US); COX, Dennis E., Belleville, MI 48111 (US)
(74) Representative: Hooiveld, Arjen Jan Winfried
(86) International application number: PCT/US2015/055953
(87) International publication number: WO 2016/061461

(56) References cited:
- EP-A1- 2 113 432
- EP-A1- 2 604 482
- DE-U1-202012 102 614
- US-A1- 2010 005 609
- US-A1- 2013 025 084

## Description

### CROSS REFERENCE TO RELATED APPLICATION

This Patent Application claims the benefit of and priority to U.S. Provisional Patent Application Serial No. 62/065,351, filed October 17, 2014, and U.S. Utility Patent Application Serial No. 14/885,297, filed October 16, 2015.

### BACKGROUND OF THE INVENTION

### 1. Technical Field

This invention relates generally windscreen wiper devices and more particularly to connecting devices for attaching windscreen wiper devices to oscillating wiper arms.

### 2. Related Art

Passenger vehicles are provided with any one of a range of different styles of oscillating wiper arms including, for example, various sizes of pin-style wiper arms, bayonet-style wiper arms, and top lock-style wiper arms. When the original equipment wiper blades become worn, customers typically look to the aftermarket for replacement wiper blades.

Some aftermarket wiper blades are configured only for attachment to one size and style of wiper arm. However, this approach may be costly to wiper blade manufacturers as separate products and packaging is required for each length and each style of oscillating wiper arm. Other wiper blades are sold with a connecting device including interchangeable parts which can be configured for attachment to two or more different types of oscillating wiper arms. However, such wiper blades are often confusing for customers who are unsure about what type and size of oscillating wiper arms that they have and which of the multiple interchangeable parts to use for their wiper arms.

### SUMMARY OF THE INVENTION AND ADVANTAGES

One aspect of the present invention is related to a windscreen wiper device including a wiper blade of a flexible material and a connecting device for attachment with an oscillating wiper arm. The connecting device includes a base and a joint part which is pivotally attached with the base. The joint part includes a main body portion which extends in a longitudinal direction between opposite longitudinal ends. Adjacent one of the longitudinal ends, the joint part has a front nose portion. Adjacent the opposite longitudinal end, the joint part includes a rear portion. The rear portion includes a pair of lugs which extend in opposite lateral directions for receiving and engaging legs on the oscillating wiper arm. The lugs are generally cylindrical in shape for allowing more easy rotation of the joint part relative to the legs of the oscillating wiper arm during attachment and detachment of the connecting device to and from the oscillating wiper arm. The front nose portion includes a pair of longitudinally extending fingers for lockingly engaging a top edge of the oscillating wiper arm, said front nose portion being connected with the main body portion via a living hinge for allowing a pivotal movement there between.

A method of attaching a windscreen wiper device with an oscillating wiper arm. The method includes the step of providing a windscreen wiper device with a connecting device that has a one-piece joint part with a main body portion which extends in a longitudinal direction and a front nose portion and a rear portion. The front nose portion is pivotable relative to the main body portion at a living hinge, and the rear portion presents a pair of laterally extending lugs with cylindrical shapes. The method proceeds with the step of contacting each of the cylindrical lugs of the joint part with the oscillating wiper arm at two points of contact with one of the points of contact being between the cylindrical lug and a back surface of a leg on the oscillating wiper arm and with the other point of contact being between the cylindrical lug and a lower edge of the oscillating wiper arm. The method continues with the step of pivoting the joint part relative to the oscillating wiper arm about the cylindrical lugs. The method proceeds with the step of lockingly engaging the front nose portion of the joint part with the oscillating wiper arm.
European patent publication no. 2 113 432 discloses a windscreen wiper device according to the preamble of claim 1.

### BRIEF DESCRIPTION OF THE DRAWINGS

These and other aspects, features and advantages of the invention will become more readily appreciated when considered in connection with the following detailed description of presently preferred embodiments and best mode, appended claims and accompanying drawings, in which:
Figure 1 is a perspective view of an exemplary windscreen wiper device;
Figure 2 is a cross-sectional view of the windscreen wiper device of Figure 1 taken through Line 2-2 of Figure 1;
Figure 3 is a an exploded view of a first exemplary embodiment of a connecting device including a base and a joint part for the windscreen wiper device of Figure 1;
Figure 4 is an enlarged view of a pair of cylindrical lugs of the joint part of Figure 3;
Figure 5 is a side view showing a top lock-style wiper arm in a pre-installation position with the joint part of Figure 3;
Figure 6 is a side view showing a top lock with window-style wiper arm in a pre-installation position with the joint part of Figure 2;

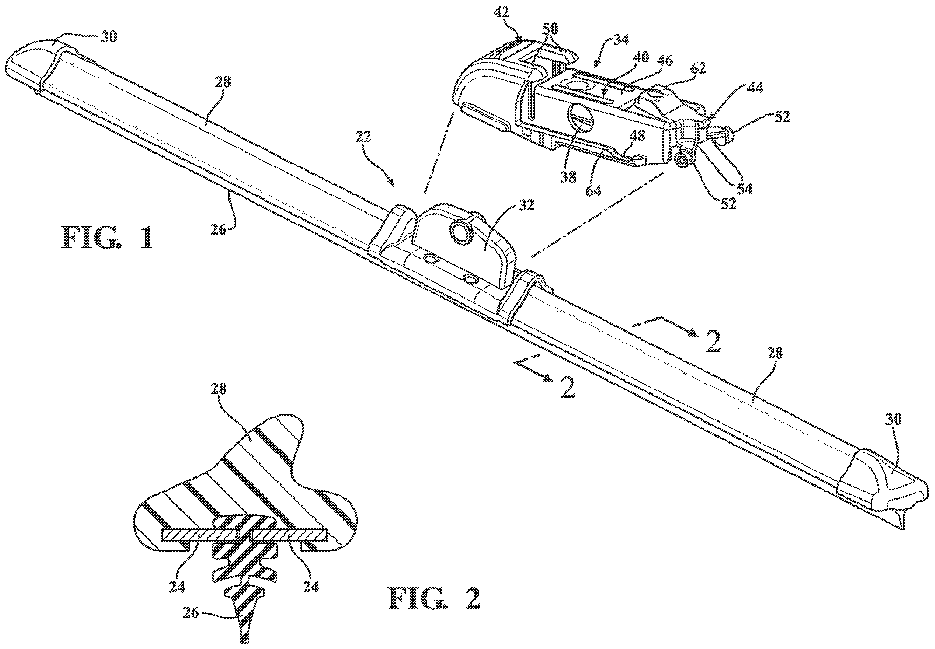

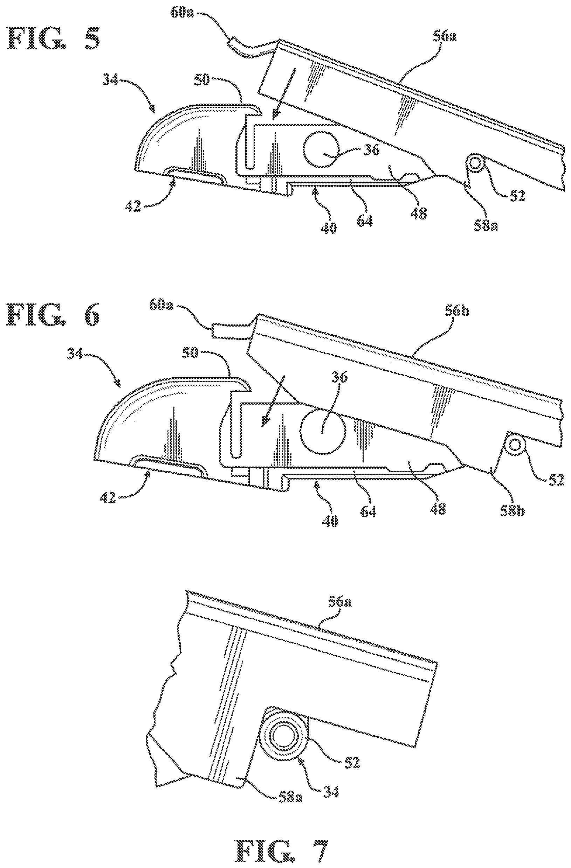

Figure 6 is a side view showing a top lock-style wiper arm as connected with the joint part of Figure 2;
Figure 7 is an enlarged view showing a cylindrical lug in engagement with a top lock-style wiper arm during the installation procedure;

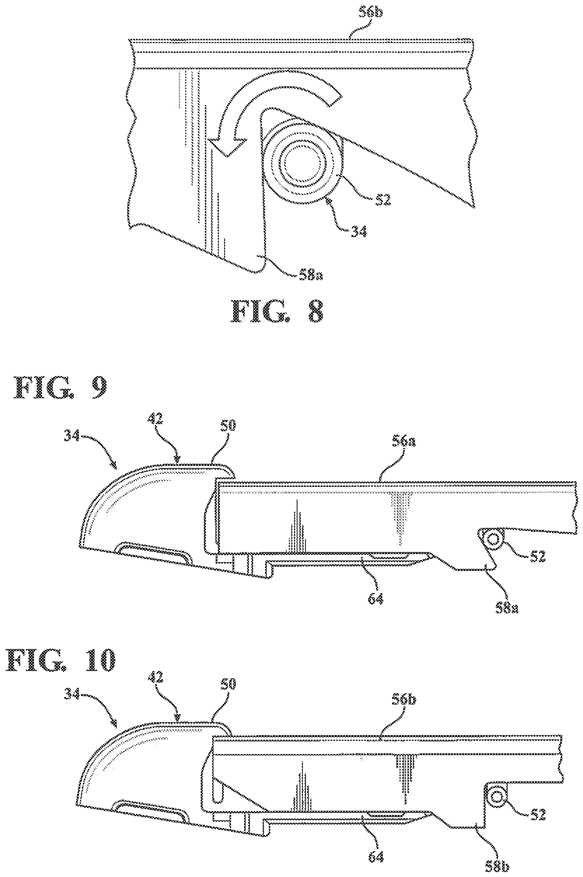

Figure 8 is an enlarged view showing a cylindrical lug in engagement with a top lock with window-style wiper arm during the installation procedure;
Figure 9 is a side view showing a top lock with window-style wiper arm as connected with the joint part of Figure 2;
Figure 10 is an enlarged view showing a cylindrical lug in engagement with a top lock with window-style wiper arm;

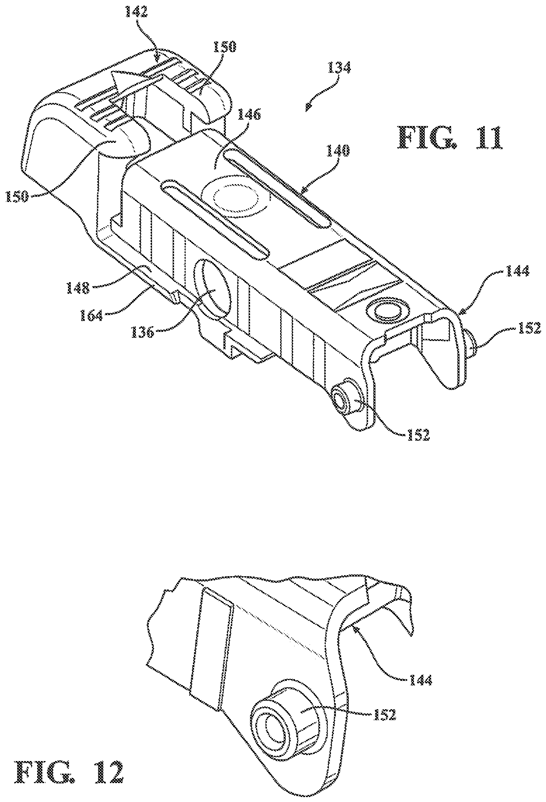

Figure 11 is a perspective view of a second exemplary embodiment of the joint part;
Figure 12 is an enlarged view of a cylindrical lug of the joint part of Figure 12; and

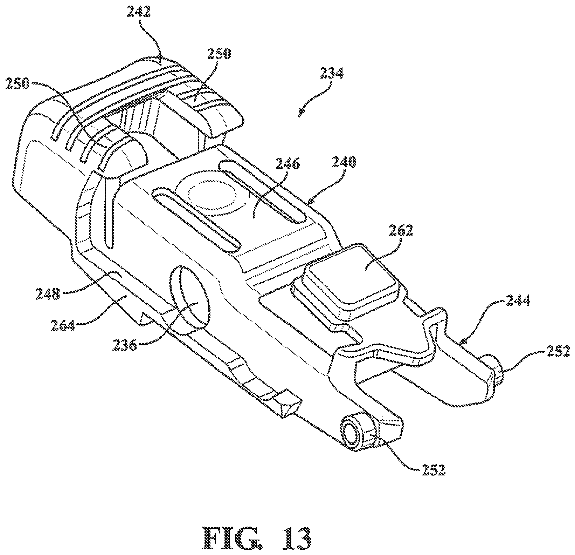

Figure 13 is a perspective view of a third exemplary embodiment of the joint part.

### DETAILED DESCRIPTION OF PRESENTLY PREFERRED EMBODIMENTS

Referring to the Figures, wherein like numerals indicate corresponding parts throughout the several views, a windscreen wiper device **20** with a connecting device **22** that is configured for attachment to a range of different sizes and styles of oscillating wiper arms is generally shown in Figure 1. Specifically, the connecting device **22** is adapted to provide a more simple connection process with rock and lock style wiper arms, thus making it easier for users to install the windscreen wiper device **20** on their vehicles. Additionally, the connecting device **22** is able to attach with bayonet-style wiper arms, thereby allowing for manufacturing advantages through economies of scale since the manufacturer can produce only one type of connecting device **20** for multiple styles of wiper arms. In the exemplary embodiment, the windscreen wiper device **20** is a beam-style wiper device in that it includes a longitudinally extending carrier element **24** (shown in Figure 2) which biases a wiper blade **26** (sometimes also known as a wiper element or a wiper strip) into a pre-curved shape and includes a pair of subspoilers **28**. The subspoilers **28** which are disposed on opposite longitudinal sides of the connecting device **22** and extend from the connecting device **22** to respective end caps **30**. In use, the subspoilers **28** are shaped to limit lift and apply a downforce on the wiper blade **26** when the vehicle is travelling at speed to improve a fluid-tight seal between the wiper blade **26** and a windshield of the vehicle. However, it should be appreciated that the connecting device **22** could also find uses in conventional-style and hybrid-style windscreen wiper devices.

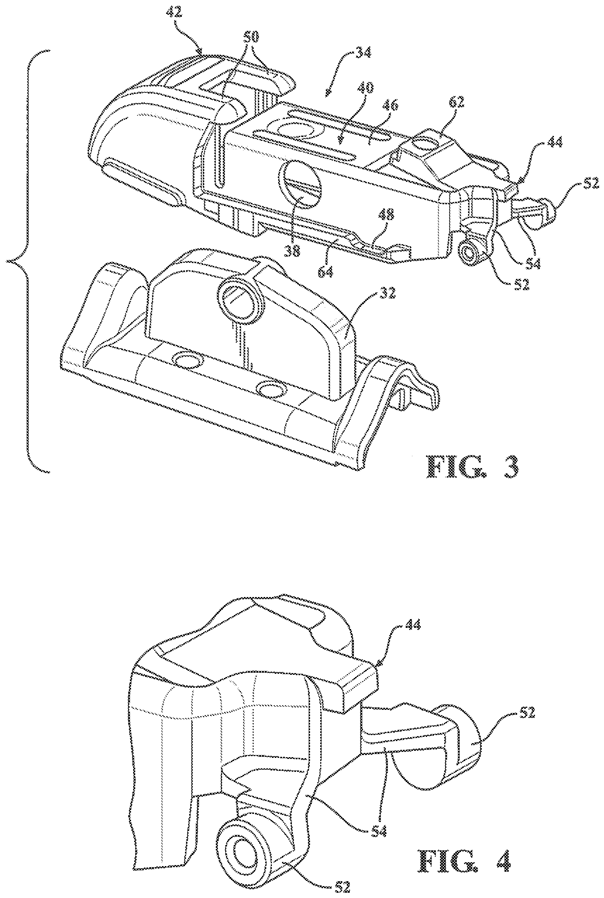

Referring now to Figure 3, the connecting device **22** is of two pieces including a base **32** and a joint part **34**. Each of the base **32** and the joint part **34** is preferably made of a single piece of injection molded plastic. However, it should be appreciated that any suitable material and forming processes may be employed. Subsequent to their separate forming, the base **32** and joint part **34** are pivotally joined together by snappingly engaging cylindrical protrusions **36** on the base **32** with similarly shaped openings **38** on the joint part **34** to allow the joint part **34** to pivot relative to the base **32** about a pivot axis.

The joint part **34** is divided longitudinally into three main portions including a main body portion **40**, a front nose portion **42** and a rear portion **44**. The main body portion **40** extends between opposite longitudinal ends. As viewed in cross-section, the main body portion **40** is generally U-shaped with a top wall **46** and a pair of laterally spaced sidewalls **48**.

The front nose portion **42** of the joint part **34** is located at one longitudinal end of the main body portion **40** and is spaced longitudinally from the pivot axis. The front nose portion **42** includes a pair of fingers **50** which extend longitudinally from an upper surface of the front nose portion **42** for releasably engaging with a top surface of top lock-style, top lock with window-style and bayonet-style wiper arms as discussed in further detail below. The front nose portion **42** is connected to the main body portion **40** at a lower end of the nose portion **42** via a first living hinge which allows the front nose portion **42** to flex forwardly and backwardly for releasably locking the fingers **50** with the top surface of the respective wiper arm. The front nose portion **42** also includes a U-shaped recess which separates the fingers **48**.

Referring still to Figure 3, the rear portion **44** of the joint part **34** is spaced longitudinally from the front nose portion **42** and includes a pair of generally cylindrically-shaped lugs **52** which are spaced longitudinally from the back end of the main body portion **40** and extend away from one another in opposite lateral directions. In this exemplary embodiment, the cylindrical lugs **52** are solidly (i.e., non-resiliently) connected with the main body portion **40** via bridge support structures **54** which extend longitudinally from a longitudinal end of the main body portion 40. The exemplary bridge support structures **54** diverge away from one another away from the main body portion **40**.

Referring now to Figures 5-10, the connecting process of attaching the joint part **34** with a top lock-style wiper arm **56a** (Figures 5, 7 and 9) and a top lock with window-style wiper arm **56b** (Figures 6, 8 and 10) is shown. The connecting process starts by angling the joint part **34** relative to the wiper arm **56a**, **56b** and contacting each of the cylindrical lugs **52** with pack the wiper arm **56a**, **56b** at two points of contact. Specifically, one of the points of contact is between an outer surface of the lug **52** and a back surface of a downwardly extending leg **58a**, **58b** on the respective wiper arm **56a**, **56b**. As shown in Figures 7 and 8, the joint part **34** is then rotated or pivoted relative to the wiper arm **56a**, **56b**. A tongue **60a**, **60b** on the front of the wiper arm **56a**, **56b** passes through the U-shaped opening between the fingers **50** as the front nose portion **42** hinges forwardly and snaps to lockingly engage the fingers **50** with a top wedge of the wiper arm **56a**, **56b**, Figures 9 and 10 show the joint part **34** properly locked with the wiper arms **56a**, **56b**. The circular outer surfaces of the cylindrical lugs **52** smoothen the pivoting of the joint part **34** relative to the wiper arm **56a**, **56b** and provide a more natural feel to the customer as compared to the connecting devices of other wiper devices.

Disconnecting the wiper arm **56a**, **56b** from the joint part **34** involves urging the front nose portion **42** forwardly to disengage the fingers **50** on the nose portion **42** from the top edge of the wiper arm **56a**, **56b**. The joint part **34** and wiper arm **56a**, **56b** may then be pivoted relative to one another in the reverse direction from the installation. During both the installation and the detachment processes, the cylindrical lugs **52** remain in their respective positions and do not resiliently move.

Referring back to Figure 3, the exemplary joint part **34** also includes features for connection with a bayonet-style wiper arm (not shown). Specifically, the top wall **46** of the main body portion **40** includes a resilient, or spring loaded tab with a button **62** for snappingly engaging with an opening in a bayonet-style wiper arm. The main body portion **40** also presents at least one rail **62** for receiving a lower flange of the bayonet-style wiper arm to additionally lock the bayonet-style wiper arm with the joint part **34**.

A second exemplary embodiment of the joint part **134** is shown in Figures 11 and 12 with like numerals, separated by a factor of 100, indicating corresponding parts with the above-described embodiment. This exemplary embodiment is distinguished from the above-described embodiment in that it lacks the button and thus is not configured for attachment with bayonet-style wiper arms and also in that the laterally extending and cylindrically shaped lugs **152** extend directly from the side walls **148** of the joint part **134**. That is, the top wall **146** and side walls **148** of the main body portion **140** extend to the rear portion **144** and the rear portion **144** lacks the bridge support structures of the above-described embodiment.

A third exemplary embodiment of the joint part **234** is generally shown in Figure 13 with like numerals, separated by a factor of 200, indicating corresponding parts with the first exemplary embodiment This embodiment includes features of both the first and second exemplary embodiments described above. For example, the third embodiment includes the button **262** for attaching with bayonet-style wiper arms of the first exemplary embodiment and the cylindrical lugs **252** are on the side walls **248** as with the second embodiment described above.

Obviously, many modifications and variations of the present invention are possible in light of the above teachings. It is, therefore, to be understood that within the scope of the appended claims, the invention may be practiced otherwise than as specifically described.

## Claims

1. A windscreen wiper device (20), comprising:
a wiper blade (26) of a flexible material;
connecting device (22) for attachment with an oscillating wiper arm (56a, 56b);
said connecting device (22) including a base (32) and a joint part (34) which is pivotably attached with said base (32);
said joint part (34) including a main body portion (40) which extends in a longitudinal direction between opposite longitudinal ends, said joint part (34) further including a front nose portion (42) positioned adjacent one longitudinal end of said main body portion (40), and said joint part (34) further including a rear portion (44) positioned at an opposite longitudinal end of said main body portion (40) from said front nose portion (42);
said rear portion (44) including a pair of lugs (52) which extend in opposite lateral directions for receiving legs (58a, 58b) on the oscillating wiper arm (56a, 56b); and
said lugs (52) being generally cylindrical in shape for allowing easy rotation of said joint part (34) relative to the legs (58a, 58b) of the oscillating wiper arm (56a, 56b) during attachment and detachment of said connecting device (22) with the oscillating wiper arm (56a, 56b),
**characterized in that** said front nose portion (42) includes a pair of longitudinally extending fingers (50) for lockingly engaging a top edge of at least one style of oscillating wiper arm (56a, 56b), wherein said front nose portion (42) is connected with said main body portion (40) via a living hinge for allowing said front nose portion (42) to pivot relative to said main body portion (40).

2. The windscreen wiper device (20) as set forth in claim 1, wherein said lugs (52) are connected with said main body portion (40) via at least one bridge (54).

3. The windscreen wiper device (20) as set forth in claim 2, wherein said at least one bridge is a pair of bridges which diverge away from one another from said main body portion (40).

4. The windscreen wiper device (20) as set forth in claim 1, wherein said main body portion (40) and said rear portion (44) are generally U-shaped with a top wall (46) and a pair of side walls (48) and wherein said cylindrical lugs (52) extend laterally from said side walls (48).

5. The windscreen wiper device (20) as set forth in claim 1, wherein said fingers (50) of said front nose portion (42) are spaced laterally from one another by a U-shaped opening for allowing a tongue (60a) on one style of oscillating wiper arm to pass between said fingers (50) during attachment and detachment of said joint part (34) with the oscillating wiper arm (56a, 56b).

6. The windscreen wiper device (20) as set forth in claim 1, wherein said main body portion (40) has a top wall (46) with a resilient tab and a button (62) formed therein for lockingly engaging within an opening of one style of oscillating wiper arm (56a, 56b).

7. A method of attaching a windscreen wiper device (20) with an oscillating wiper arm, comprising the steps of:
providing a windscreen wiper device (20) with a connecting device (22) that has a one-piece joint part (34) with a main body portion (40) which extends in a longitudinal direction and a front nose portion (42) and a rear portion (44), the front nose portion (42) being pivotable relative to the main body portion (40) at a living hinge, and the rear portion (44) presenting a pair of laterally extending lugs (52) with cylindrical shapes;
contacting each of the cylindrical lugs (52) of the joint part (34) with the oscillating wiper arm (56a, 56b) at two points of contact with one of the points of contact being between the cylindrical lug (52) and a back surface of a leg (58a, 58b) on the oscillating wiper arm (56a, 56b) and with the other point of contact being between the cylindrical lug (52) and a lower edge of the oscillating wiper arm (56a, 56b);
pivoting the joint part (34) relative to the oscillating wiper arm (56a, 56b) about the cylindrical lugs (52); and
lockingly engaging the front nose portion (42) of the joint part (34) with the oscillating wiper arm (56a, 56b).

## Patentansprüche

1. Scheibenwischvorrichtung (20), umfassend:
ein Wischerblatt (26) aus einem flexiblen Material;
eine Verbindungsvorrichtung (22) zur Befestigung an einem oszillierenden Wischerarm (56a, 56b);
wobei die Verbindungsvorrichtung (22) eine Basis (32) und einen Gelenkteil (34), der an der Basis (32) schwenkbar befestigt ist, aufweist;
wobei der Gelenkteil (34) einen Hauptkörperabschnitt (40) aufweist, der sich in einer Längsrichtung zwischen gegenüberliegenden Längsenden erstreckt, wobei der Gelenkteil (34) ferner einen vorderen Nasenabschnitt (42) aufweist, der benachbart zu einem Längsende des Hauptkörperabschnitts (40) angeordnet ist, und wobei der Gelenkteil (34) ferner einen hinteren Abschnitt (44) aufweist, der an einem dem vorderen Nasenabschnitt gegenüberliegenden Längsende (42) des Hauptkörperabschnitts (40) angeordnet ist;
wobei der hintere Abschnitt (44) ein Paar Ansätze (52) aufweist, die sich zur Aufnahme von Schenkeln (58a, 58b) an dem oszillierenden Wischerarm (56a, 56b) in entgegengesetzten seitlichen Richtungen erstrecken; und
wobei die Ansätze (52) eine im Allgemeinen zylindrische Form aufweisen, um, während einer Befestigung und Loslösung der Verbindungsvorrichtung (22) mit/von dem oszillierenden Wischerarm (56a, 56b), eine leichte Drehung des Gelenkteils (34) relativ zu den Schenkeln (58a, 58b) des oszillierenden Wischerarms (56a, 56b) zu ermöglichen,
**dadurch gekennzeichnet, dass** der vordere Nasenabschnitt (42) ein Paar sich längs erstreckender Zinken (50) zum verriegelnden Eingreifen in eine obere Kante der mindestens einen Art von oszillierendem Wischerarm (56a, 56b) aufweist, wobei der vordere Nasenabschnitt (42) mit dem Hauptkörperabschnitt (40) über ein Biegescharnier verbunden ist, um dem vorderen Nasenabschnitt (42) zu ermöglichen, relativ zu dem Hauptkörperabschnitt (40) zu schwenken.

2. Scheibenwischvorrichtung (20) nach Anspruch 1, wobei die Ansätze (52) über mindestens einen Zwischensteg (54) mit dem Hauptkörperabschnitt (40) verbunden sind.

3. Scheibenwischvorrichtung (20) nach Anspruch 2, wobei es sich bei dem mindestens einen Zwischensteg um ein Paar von Zwischenstegen handelt, die sich vom Hauptkörperabschnitt (40) ausgehend voneinander entfernen.

4. Scheibenwischvorrichtung (20) nach Anspruch 1, wobei der Hauptkörperabschnitt (40) und der hintere Abschnitt (44) im Allgemeinen U-förmig ist, mit einer oberen Wand (46) und einem Paar von Seitenwänden (48), und wobei sich die zylindrischen Ansätze (52) von den Seitenwänden (48) ausgehend seitlich erstrecken.

5. Scheibenwischvorrichtung (20) nach Anspruch 1, wobei die Zinken (50) des vorderen Nasenabschnitts (42) durch eine U-förmige Öffnung seitlich voneinander beabstandet sind, um zu ermöglichen, dass eine Zunge (60a) an einer Art von oszillierendem Wischerarm, während der Befestigung und Loslösung des Gelenkteils (34) an/von dem oszillierenden Wischerarm (56a, 56b), zwischen den Zinken (50) hindurchgeht.

6. Scheibenwischvorrichtung (20) nach Anspruch 1, wobei der Hauptkörperabschnitt (40) eine obere Wand (46) mit einer federnden Lasche und einem Knopf (62) aufweist, die zum verriegelnden Eingreifen in eine Öffnung der einen Art von oszillierendem Wischerarm (56a, 56b) darin ausgebildet ist.

7. Verfahren zur Befestigung einer Scheibenwischvorrichtung (20) an einem oszillierenden Wischerarm, umfassend die Schritte:
Bereitstellen einer Scheibenwischvorrichtung (20) mit einer Verbindungsvorrichtung (22), die einen einteiligen Gelenkteil (34) mit einem Hauptkörperabschnitt (40), der sich in einer Längsrichtung erstreckt, und einem vorderen Nasenabschnitt (42) und einem hinteren Abschnitt (44) aufweist, wobei der vordere Nasenabschnitt (42) relativ zu dem Hauptkörperabschnitt (40) an einem Biegescharnier schwenkbar ist und der hintere Abschnitt (44) ein Paar von sich seitlich erstreckenden Ansätzen (52) mit zylindrischer Form aufweist;
Inkontaktbringen eines jeden der zylindrischen Ansätze (52) des Gelenkteils (34) mit dem oszillierenden Wischerarm (56a, 56b) an zwei Kontaktpunkten, wobei einer der Kontaktpunkte zwischen dem zylindrischen Ansatz (52) und einer Rückseite eines Schenkels (58a, 58b) an dem oszillierenden Wischerarm (56a, 56b) liegt, und der andere Kontaktpunkt zwischen dem zylindrischen Ansatz (52) und einer unteren Kante des oszillierenden Wischerarms (56a, 56b) liegt;
Schwenken des Gelenkteils (34) relativ zu dem oszillierenden Wischerarm (56a, 56b) um den zylindrischen Ansatz (52); und
verriegelndes Ineingriffbringen des vorderen Nasenabschnitts (42) des Gelenkteils (34) mit dem oszillierenden Wischerarm (56a, 56b).

## Revendications

1. Dispositif d'essuie-glace (20) comprenant :
un balai d'essuie-glace (26) en matériau souple ;
un dispositif de raccordement (22) pour la fixation avec un bras d'essuie-glace oscillant (56a, 56b) ;
ledit dispositif de raccordement (22) comprenant une base (32) et une partie de joint (34) qui est fixée de manière pivotante à ladite base (32) ;
ladite partie de joint (34) comprenant une partie de corps principal (40) qui s'étend dans une direction longitudinale entre des extrémités longitudinales opposées, ladite partie de joint (34) comprenant en outre une partie de nez avant (42) positionnée de manière adjacente à une extrémité longitudinale de ladite partie de corps principal (40), ladite partie de joint (34) comprenant en outre une partie arrière (44) positionnée au niveau d'une extrémité longitudinale opposée de ladite partie de corps principal (40) à partir de ladite partie de nez avant (42) ;
ladite partie arrière (44) comprenant une paire de pattes (52) qui s'étendent dans des directions latérales opposées pour recevoir des pattes (58a, 58b) sur le bras d'essuie-glace oscillant (56a, 56b) ; et
lesdites pattes (52) ayant une forme généralement cylindrique pour permettre la rotation facile de ladite partie de joint (34) par rapport aux pattes (58a, 58b) du bras d'essuie-glace oscillant (56a, 56b) pendant la fixation et le détachement dudit dispositif de raccordement (22) avec le bras d'essuie-glace oscillant (56a, 56b),
**caractérisé en ce que** ladite partie de nez avant (42) comprend une paire de doigts (50) s'étendant de manière longitudinale pour mettre en prise, par verrouillage, un bord supérieur d'au moins un style de bras d'essuie-glace oscillant (56a, 56b), ladite partie de nez avant (42) étant raccordée avec ladite partie de corps principal (40) via une charnière active pour permettre à ladite partie de nez avant (42) de pivoter par rapport à ladite partie de corps principal (40).

2. Dispositif d'essuie-glace (20) selon la revendication 1, dans lequel lesdites pattes (52) sont raccordées avec ladite partie de corps principal (40) via au moins un pont (54).

3. Dispositif d'essuie-glace (20) selon la revendication 2, dans lequel ledit au moins un pont est une paire de ponts qui divergent l'un de l'autre à partir de ladite partie de corps principal (40).

4. Dispositif d'essuie-glace (20) selon la revendication 1, dans lequel ladite partie de corps principal (40) et ladite partie arrière (44) sont généralement en forme de U avec une paroi supérieure (46) et une paire de parois latérales (48) et dans lequel lesdites pattes cylindriques (52) s'étendent latéralement à partir desdites parois latérales (48).

5. Dispositif d'essuie-glace (20) selon la revendication 1, dans lequel lesdits doigts (50) de ladite partie de nez avant (42) sont espacés latéralement l'un de l'autre par une ouverture en forme de U pour permettre à une languette (60a) sur un style de bras d'essuie-glace oscillant de passer entre lesdits doigts (50) pendant la fixation et le détachement de ladite partie de joint (34) avec le bras d'essuie-glace oscillant (56a, 56b).

6. Dispositif d'essuie-glace (20) selon la revendication 1, dans lequel ladite partie de corps principal (40) a une paroi supérieure (46) avec une languette résiliente et un bouton (62) formé à l'intérieur de cette dernière pour se mettre en prise, par verrouillage, à l'intérieur d'une ouverture d'un style de bras d'essuie-glace oscillant (56a, 56b).

7. Procédé pour fixer un dispositif d'essuie-glace (20) avec un bras d'essuie-glace oscillant, comprenant les étapes consistant à :
prévoir un dispositif d'essuie-glace (20) avec un dispositif de raccordement (22) qui a une partie de joint d'un seul tenant (34) avec une partie de corps principal (40) qui s'étend dans une direction longitudinale et une partie de nez avant (42) et une partie arrière (44), la partie de nez avant (42) pouvant pivoter par rapport à la partie de corps principal (40) au niveau d'une charnière active, et la partie arrière (44) présentant une paire de pattes (52) s'étendant latéralement avec des formes cylindriques ;
mettre en contact chacune des pattes cylindriques (52) de la partie de joint (34) avec le bras d'essuie-glace oscillant (56a, 56b) au niveau de deux points de contact, l'un des points de contact étant entre la patte cylindrique (52) et une surface arrière d'une patte (58a, 58b) sur le bras d'essuie-glace oscillant (56a, 56b), et l'autre point de contact étant entre la patte cylindrique (52) et un bord inférieur du bras d'essuie-glace oscillant (56a, 56b) ;
faire pivoter la partie de joint (34) par rapport au bras d'essuie-glace oscillant (56a, 56b) autour des pattes cylindriques (52) ; et
mettre en prise, par verrouillage, la partie de nez avant (42) de la partie de joint (34) avec le bras d'essuie-glace oscillant (56a, 56b).
